(19) Europäisches Patentamt
European Patent Office
Office européen des brevets

(11) **EP 1 985 977 A1**

(12) **EUROPEAN PATENT APPLICATION**

(43) Date of publication:
**29.10.2008 Bulletin 2008/44**

(51) Int Cl.:
**G01G 3/14** *(2006.01)*

(21) Application number: **08005813.4**

(22) Date of filing: **27.03.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **25.04.2007 JP 2007115123**

(71) Applicant: **TANITA CORPORATION**
**Tokyo 174-8630 (JP)**

(72) Inventor: **Kenmochi, Masayuki**
**Itabashi-ku**
**Tokyo 174-8630 (JP)**

(74) Representative: **HOFFMANN EITLE**
**Patent- und Rechtsanwälte**
**Arabellastrasse 4**
**81925 München (DE)**

(54) **Weighing scale**

(57)    A weighing scale includes a platform on which an object to be weighed is placed, a weight measurer for outputting weight data indicating an apparent weight value of the object to be weighed, and an acceleration sensor for measuring components of the gravitational acceleration exerted on the weighing scale. A memory stores compensation factors with sets of components of the gravitational acceleration, each of the first compensation factors being a ratio between the true weight value of a material and an apparent weight value of the material, which is assumed to be measured by the weight measurer when the planar surface is inclined at an angle. The weighing scale further includes a compensator that refers to the memory for obtaining an appropriate compensation factor corresponding to the components of the gravitational acceleration currently being measured by the acceleration sensor. The compensator compensates for, by the obtained compensation factor, the apparent weight value of the object to be weighed indicated by the weight data currently being output from the weight measurer.

Fig. 2

EP 1 985 977 A1

**Description**

FIELD OF THE INVENTION

The present invention relates to a weighing scale having a platform on which objects to be weighed are placed, and having a weight measurer for measuring the weights of the objects.

DESCRIPTION OF RELATED ART

There have been developed techniques for maintaining platforms of weighing scales so as to be horizontal because if the platform were inclined, the weight sensor (weight measurer) would output an erroneous result due to the inclination, and such an error often could not have been estimated in advance.

For example, JP 2005-49271A discloses a weighing scale containing a spirit level therein. The user observes the spirit level and adjusts the lengths of legs of the weighing scale, whereby the weighing scale may be oriented so as to be horizontal.

However, adjusting the scale so that it is level and horizontal takes a substantial amount of time. Furthermore, whenever the weighing scale is moved and is set up in another location, this troublesome leveling and adjusting it so as to be horizontal must be performed.

SUMMARY OF THE INVENTION

Accordingly, the present invention provides a weighing scale that can easily compensate for the errors in measured weights due to inclination of the platform (inclination-induced error) so that it is easier for users to set up the weighing scale.

In accordance with an aspect of the invention, there is provided a platform including a planar surface on which an object to be weighed, having a weight, is placed; a weight measurer for outputting weight data indicating an apparent weight value of the object to be weighed on the planar surface of the platform, the apparent weight value being affected by inclination of the planar surface; an acceleration sensor for measuring at least two components of the gravitational acceleration exerted on the weighing scale in at least two directions that are orthogonal to each other; and a first compensator which compensates, on the basis of the at least two components of the gravitational acceleration currently being measured by the acceleration sensor, the apparent weight value of the object to be weighed indicated by the weight data currently being output from the weight measurer, thereby determining a compensated weight value of the object to be weighed.

With such a structure, the first compensator compensates the apparent weight value of the object to be weighed indicated by the weight data currently being output from the weight measurer, on the basis of the at least two components of the gravitational acceleration currently being measured by the acceleration sensor. Therefore, the weighing scale automatically compensates for the error of the measured weight due to inclination of the platform (inclination-induced error) without users having to go through the trouble of making the planar surface level and horizontal by observing the spirit level, and determines the compensated and precise weight value of the object being weighed. This is convenient because the troublesome operations for orienting the weighing scale horizontally can be avoided, even when the weighing scale is moved and is set up in another location.

The weighing scale may further include a memory for storing first compensation factors, each of the first compensation factors being a ratio between a true weight value of a material and an apparent weight value of the material which is assumed to be measured by the weight measurer when the planar surface is inclined at an angle, the first compensator referring to the memory for obtaining a first compensation factor corresponding to the components of the gravitational acceleration currently being measured by the acceleration sensor, the first compensator compensating, by the obtained first compensation factor, the apparent weight value of the object to be weighed indicated by the weight data currently being output from the weight measurer, thereby determining a compensated weight value of the object to be weighed. Therefore, the first compensator compensates the apparent weight value of the object to be weighed, using the first compensation factor that is the ratio between the true weight value and the apparent weight value and corresponds to the current angle of inclination of the planar surface. The weighing scale can precisely determine the compensated weight value of the object being weighed.

In an embodiment of the present invention, the memory may store the first compensation factors and sets of components of the gravitational acceleration, each of the sets of components of the gravitational acceleration having at least two components of the gravitational acceleration that are assumed to be exerted on the weighing scale in at least two orthogonal directions when the planar surface is inclined at an angle, each of the first compensation factors being associated in the memory with a set of components of the gravitational acceleration that are assumed to be exerted on the weighing scale when the planar surface is inclined at the angle corresponding to the apparent weight value of the material. In this embodiment, it is easy for the first compensator to obtain the first compensation factor corresponding to the components of the gravitational acceleration currently being measured since each first compensation factor is associated in the memory with a set of components of the gravitational acceleration.

In the weighing scale according to this embodiment of the present invention, the memory may store a large number of the first compensation factors and a large number of the sets of components of the gravitational acceleration in order to compensate for any errors caused by various angles of inclination of the platform.

However, preferably, the first compensator may interpolate the first compensation factor corresponding to the components of the gravitational acceleration currently being measured by the acceleration sensor, on the basis of the first compensation factors and sets of components of the gravitational acceleration stored in the memory and the components of the gravitational acceleration currently being measured by the acceleration sensor. Therefore, a limited number of the first compensation factors and a limited number of the sets of components of the gravitational acceleration may be stored in the memory.

For the weighing scale according to this embodiment of the present invention, the contents (first compensation factors and sets of components of the gravitational acceleration) stored in the memory may be measured or be determined at another machine, which may be of the same type as in this aspect of the present invention. The contents may be transferred from outside of the weighing scale and be written into the memory.

However, preferably, the weighing scale further includes a first compensation factor generator and a recorder, the first compensation factor generator receiving, from the weight measurer, weight data indicating the apparent weight value of the material on the planar surface of the platform of the weight measurer when the planar surface is inclined at an angle, the first compensation factor generator calculates a first compensation factor that is a ratio between the true weight value of the material and the apparent weight value of the material, the recorder recording the first compensation factor calculated by the first compensation factor generator with a set of components of the gravitational acceleration measured by the acceleration sensor when the planar surface is inclined at the angle at which the first compensation factor generator receives, from the weight measurer, the weight data indicating the apparent weight value of the material. The weight measurer of the weighing scale actually measures the apparent weight value of a material, and the first compensation factor generator calculates a first compensation factor on the basis of the true weight value and the apparent weight value actually measured by the weight measurer of the weighing scale. Furthermore, the recorder records the calculated first compensation factor with a set of components of the gravitational acceleration actually measured by the acceleration sensor of the weighing scale. Therefore, the instrumental error of the weight measurer and the instrumental error of the acceleration sensor may be compensated for in addition to the inclination-induced error.

In accordance with another embodiment of the invention, the memory may store the first compensation factors and angles of inclination of the planar surface, each of the first compensation factors being associated in the memory with the angle of inclination of the planar surface corresponding to the apparent weight value of the material. The weighing scale further include an inclination angle calculator for calculating a current angle of inclination of the planar surface on the basis of the components of the gravitational acceleration currently being measured by the acceleration sensor. The first compensator refers to the memory for obtaining a first compensation factor corresponding to the current angle of inclination of the planar surface calculated by the inclination angle calculator, the first compensator compensating, by the obtained first compensation factor, the apparent weight value of the object to be weighed indicated by the weight data currently being output from the weight measurer, thereby determining a compensated weight value of the object to be weighed. In this embodiment, it is easy for the first compensator to obtain the first compensation factor corresponding to the components of the gravitational acceleration currently being measured since each first compensation factor is associated in the memory with the angle of inclination.

In the weighing scale according to this embodiment of the present invention, the memory may store a large number of the first compensation factors and a large number of the angles of inclination in order to compensate for any errors caused by various angles of inclination of the platform.

However, preferably, the first compensator may interpolate the first compensation factor corresponding to the current angle of inclination of the planar surface currently calculated by the inclination angle calculator, on the basis of the first compensation factors and angles of inclination of the planar surface stored in the memory and the current angle of inclination of the planar surface currently calculated by the inclination angle calculator. In this embodiment, a limited number of the first compensation factors and a limited number of the angles of inclination may be stored in the memory.

For the weighing scale according to this embodiment of the present invention, the contents (first compensation factors and angles of inclination) stored in the memory might be measured or determined at another machine, which may be of the same type as in this aspect of the present invention. The contents might be transferred from outside of the weighing scale and be written into the memory.

However, preferably, the weighing scale further includes a first compensation factor generator and a recorder, the first compensation factor generator receiving, from the weight measurer, weight data indicating the apparent weight value of the material on the planar surface of the platform the weight measurer when the planar surface is inclined at an angle, the first compensation factor generator calculates a first compensation factor that is a ratio between the true weight value of the material and the apparent weight value of the material, the recorder recording the first compensation factor calculated by the first compensation factor generator with the angle calculated by the inclination angle calculator at which the first compensation factor generator receives, from the weight measurer, the weight data indicating the apparent weight value of the material. In this embodiment, the weight measurer of the weighing scale actually measures the apparent weight value of a material, and the first compensation factor generator calculates a first compensation factor on the basis of the true weight value and the apparent weight value actually measured by the weight measurer of the weighing scale. Furthermore, the recorder records the calculated first compensation factor with the angle calculated by the inclination angle calculator on the basis of a set of components of the gravitational acceleration actually measured by the acceleration sensor of the weighing scale. Therefore, in accordance with this embodiment, the instrumental error of the weight measurer and the instrumental error of the acceleration sensor may be compensated for in addition to the inclination-induced error.

In each embodiment of the present invention, the memory may store a reference gravitational acceleration at a reference point, the acceleration sensor measuring three components of the gravitational acceleration exerted on the weighing scale in three directions that are orthogonal to one another. The weighing scale may further include: a second acceleration sensor measuring three components of the gravitational acceleration exerted on the weighing scale in three directions that are orthogonal to one another; a gravitational acceleration calculator for calculating an actual gravitational acceleration exerted on the weighing scale that is the square root of the sum of the squares of the three components of the gravitational acceleration measured by the second acceleration sensor; and a second compensator for calculating a second compensation factor that is a ratio between the reference gravitational acceleration and the actual gravitational acceleration, and for compensating, by the second compensation factor, the compensated weight value determined by the first compensator, thereby determining a second compensated weight value of the object to be weighed.

Gravitational acceleration varies slightly depending on the location on Earth, and therefore, the weight data output from the weight measurer is affected by the gravitational error. The gravitational error can be assumed for individual locations and can be eliminated from the measured weight by the user setting the weighing scale. However, according to the above-described embodiment, the second compensator calculates the second compensation factor on the basis of the reference gravitational acceleration and the actual gravitational acceleration that is calculated from three components of the gravitational acceleration actually measured by the second acceleration sensor, and further compensates for the compensated weight value. Therefore, the gravitational error can be automatically subtracted out without the user setting the weighing scale.

The second acceleration sensor may be the same as, or different from, the acceleration sensor used for compensating for the inclination-induced error.

BRIEF DESCRIPTION OF THE DRAWINGS

With reference to the accompanying drawings, various embodiments of the present invention will be described hereinafter. In the drawings:

Fig. 1A is a plane view showing a weighing scale of a first embodiment according to the present invention;
Fig. 1B is a front view showing the weighing scale in Fig. 1A;
Fig. 2 is a functional block diagram showing functions of the weighing scale in Fig. 1A;
Fig. 3 is a schematic diagram showing the principle of measuring components of the gravitational acceleration by an acceleration sensor in the weighing scale in Fig. 1A;
Fig. 4 is a table showing an example of contents of a compensation table stored in a memory of the weighing scale in Fig. 1A;
Fig. 5 is a flowchart representing the flow of a measurement process according to the first embodiment;
Fig. 6 is a flowchart representing the flow of a calibration process according to the first embodiment;
Fig. 7 is a flowchart representing the flow of a measurement process according to a second embodiment of the present invention;
Fig. 8 is a flowchart representing the flow of a calibration process according to the second embodiment;
Fig. 9 is a functional block diagram showing functions of a weighing scale of a third embodiment according to the present invention;
Fig. 10 is a flowchart representing the flow of a measurement process according to the third embodiment;
Fig. 11 is a flowchart representing the flow of a calibration process according to the third embodiment; and
Fig. 12 is a table showing an example of contents of another compensation table in a modified embodiment.

DETAILED DESCRIPTION OF PREFERRED EMBODIMENTS

FIRST EMBODIMENT

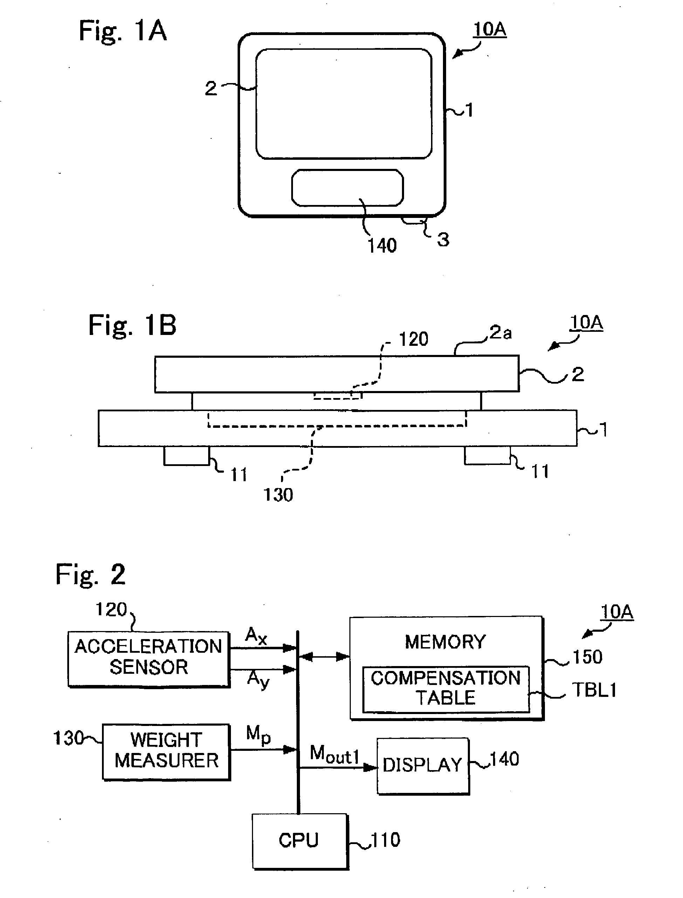

As shown in Figs. 1A and 1B, a weighing scale 10A of a first embodiment according to the present invention includes a casing or housing 1 supported by a plurality of legs 11 on a support surface (e.g. a floor), and a platform 2 including an upper planar surface 2a on which an object to be weighed is placed.

A weight measurer 130 is located within the housing 1. The platform 2 is attached to the housing 1 in such a manner that the weight measurer 130 measures the load, i.e., weight of the object to be weighed on the planar surface 2a of the platform 2. The weight measurer 130 may be a load cell or a weight sensor that outputs weight data indicating the weight value of the object to be weighed on the planar surface 2a of the platform 2.

An accelerometer, i.e., acceleration sensor 120 is mounted on the platform 2. The acceleration sensor 120 is very sensitive and appropriately calibrated, so that the acceleration sensor 120 can measure even components of the gravitational acceleration (gravity acceleration) exerted on the platform 2. The acceleration sensor 120 is, for example, but is not limited to, a piezo-resistive semiconductor-based acceleration sensor, a capacitive semiconductor-based acceleration sensor, or a thermal acceleration sensor.

In an alternative embodiment, the acceleration sensor 120 may be mounted on another location in the weighing scale since the weighing scale is not so large that the gravitational acceleration exerted on the sensor 120 can be considered constant as far as the sensor 120 is mounted on the weighing scale. Therefore, the acceleration sensor 120 can measure components of the gravitational acceleration exerted on the location to which the sensor 120 is mounted, but the measured components are generally equal to those exerted on the platform 2.

An electric power switch 3 is provided at a side surface of the electric power switch 3 for turning on and off the power to the weighing scale 10A. A display 140 is provided on the top wall of the housing 1 for displaying suitable information, such as the result of measurement (measured weight). The display 140 is, for example, but is not limited to, an LCD (liquid crystal display).

As shown in Fig. 2, the weighing scale 10A further includes a memory 150 and a CPU (central processing unit) 110 that are located in the housing 1. The CPU 110 conducts overall control of the weighing scale 10A.

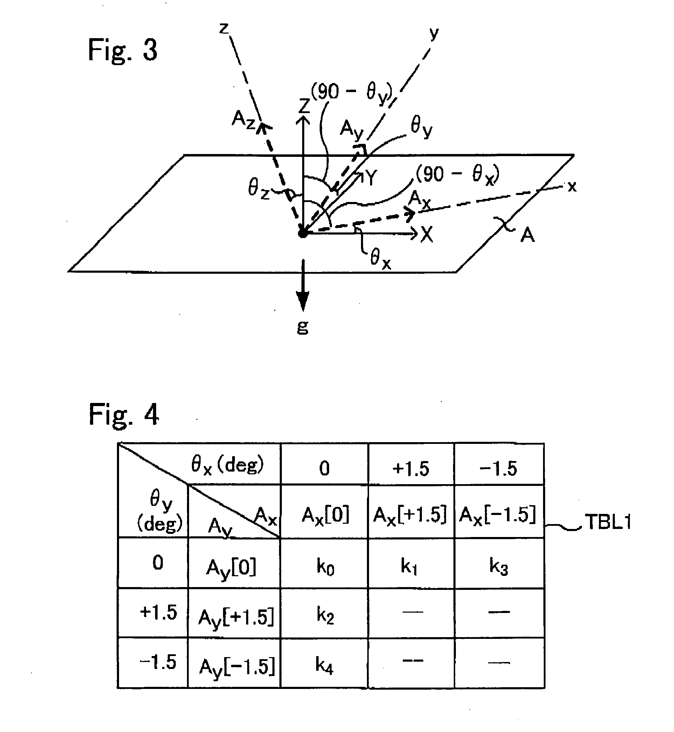

Fig. 3 is a schematic diagram showing the principle of the measuring components of the gravitational acceleration by the acceleration sensor 120. Let us assume that the acceleration sensor 120 is a triaxial type that can measure accelerations $A_x$, $A_y$, and $A_z$ in the x, y, and z directions that are, of course, orthogonal to one another. The acceleration sensor 120 is secured to weighing scale so that the x and y axes of the acceleration sensor 120 are parallel to the upper planar surface 2a of the platform 2, the x axis is parallel to the lateral direction of the platform 2, and the y axis is parallel to the anteroposterior direction of the platform 2.

When the acceleration sensor 120 is in the static condition (no dynamic load or force is being applied to the acceleration sensor 120), only the gravitational acceleration (static acceleration) is exerted on the acceleration sensor 120, and therefore, the measured accelerations $A_x$, $A_y$, and $A_z$ are the components of the gravitational acceleration in the x, y, and z directions. The amounts of the components $A_x$, $A_y$, and $A_z$ of the gravitational acceleration are related to the inclination angles of the x, y, and z axes of the acceleration sensor 120. More specifically, when the x axis of the acceleration sensor 120 is inclined so as to intersect a horizontal plane A at an angle $\theta_x$ (to intersect the Z axis (absolute vertical axis) at an angle $(90 - \theta_x)$ (degrees), the acceleration sensor 120 measures the component of the gravitational acceleration in the x direction, of which the amount $A_x$ is g times $\cos(90 - \theta_x)$ where g is the gravitational acceleration. When the y axis of the acceleration sensor 120 is inclined so as to intersect the horizontal plane A at an angle $\theta_y$ (to intersect the Z axis (absolute vertical axis) at an angle $(90 - \theta_y)$ (degrees), the acceleration sensor 120 measures the component of the gravitational acceleration in the y direction, of which the amount $A_y$ is g times $\cos(90 - \theta_y)$. When the z axis of the acceleration sensor 120 is inclined so as to intersect the Z axis (absolute vertical axis) at an angle $\theta_z$ (degrees), the acceleration sensor 120 measures the component of the gravitational acceleration in the z direction, of which the amount $A_z$ is g times $\cos \theta_z$.

As described above, angles $\theta_x$, $\theta_y$, and $\theta_z$ are the inclination angles of the acceleration sensor 120. Angles $\theta_x$, $\theta_y$, and $\theta_z$ are the inclination angles of the upper planar surface 2a of the platform 2 since the acceleration sensor 120 is secured and oriented to the platform 2 as described above.

In this embodiment, the outputs $A_x$ and $A_y$ from the acceleration sensor 120 are utilized as will be described later. Therefore, the acceleration sensor 120 need not necessarily be a triaxial type, and it may be a biaxial type that can measure accelerations $A_x$ and $A_y$ in this embodiment.

As shown in Fig. 2, the weight measurer 130 outputs weight data $M_p$ indicating the weight value of an object to be weighed on the planar surface 2a of the platform 2, but the measured weight value is an apparent weight value affected by inclination of the planar surface 2a. For example, if the upper planar surface 2a is inclined at $\theta_x$ (but $\theta_y$ is zero degrees), the weight data $M_p$ indicates an apparent value that is equal to W times $\cos \theta_x$ when W is the true weight of the object to be weighed. If the upper planar surface 2a is inclined at $\theta_y$ (but $\theta_x$ is zero degrees), the weight data $M_p$

indicates an apparent value that is equal to W times $\cos \theta_y$. If the upper planar surface 2a is inclined at $\theta_x$ and $\theta_y$, the weight data $M_p$ indicates an apparent value affected by the angles $\theta_x$ and $\theta_y$.

The CPU 110 (first compensator) compensates for the apparent weight value indicated by the weight data $M_p$ so as to exclude inclination-induced error on the basis of a set of components of the gravitational acceleration ($A_x$ and $A_y$) measured by the acceleration sensor 120. The CPU 110 thus determines a compensated weight value of the object to be weighed, and it generates compensated weight data $M_{out1}$. The display 140 shows the compensated weight value indicated by the compensated weight data $M_{out1}$.

For the compensation of the apparent weight value, the memory 150 stores a compensation table TBL1 that will be referred to by the CPU 110. The memory 150 is, for example, but is not limited to, a ROM (read only memory). If the compensation table TBL1 is written into the memory 150 at this weighing scale 10A, the memory 150 is preferably an EPROM (erasable programmable read-only memory).

As shown in Fig. 4, the compensation table TBL1 stores first compensation factors $k_0$ through $k_4$ and sets of components of the gravitational acceleration ($A_x$ and $A_y$). In Fig. 4, each number in brackets indicates angle $\theta_x$ or $\theta_y$ that takes on values of 0, +1.5, and -1.5 degrees. Each of the first compensation factors $k_0$ through $k_4$ is the ratio between a true weight value of a material and an apparent weight value of the material which is assumed to be measured by the weight measurer 130 when the planar surface 2a of the platform 2 is inclined at the angle resulting from angles $\theta_x$ and $\theta_y$. For example, the first compensation factors $k_0$ is the ratio between the true weight value and the apparent weight value when the upper planar surface 2a is not inclined (the value of $k_0$ is 1 if the weight measurer 130 is accurate). The first compensation factors $k_1$ is the ratio between the true weight value and the apparent weight value when the upper planar surface 2a is inclined at angle $\theta_x$ that is equal to +1.5 degrees, but angle $\theta_y$ is zero degrees. The first compensation factors $k_4$ is the ratio between the true weight value and the apparent weight value when the upper planar surface 2a is inclined at angle $\theta_y$ that is equal to -1.5 degrees, but angle $\theta_x$ is zero degrees.

The true weight value and the apparent weight values may be actually measured by the weight measurer 130 of this weighing scale 10A, but may also be measured by another device at another location. The first compensation factor may be the ratio of the apparent weight to the true weight, but may be the ratio of the true weight to the apparent weight.

In the compensation table TBL1, each of the first compensation factors $k_0$ through $k_4$ is associated with a set of components of the gravitational acceleration ($A_x$ and $A_y$) that is assumed to be exerted on the weighing scale when the planar surface 2a is inclined at the angle corresponding to the apparent weight value. For example, factor $k_1$ is associated with a set of components $A_x[+1.5]$ and $A_y[0]$, whereas factor $k_4$ is associated with a set of components $A_x[0]$ and $A_y[-1.5]$. The components of the gravitational acceleration ($A_x$ and $A_y$) may be actually measured by the acceleration sensor 120 of this weighing scale 10A, but may also be measured by another accelerometer at another location.

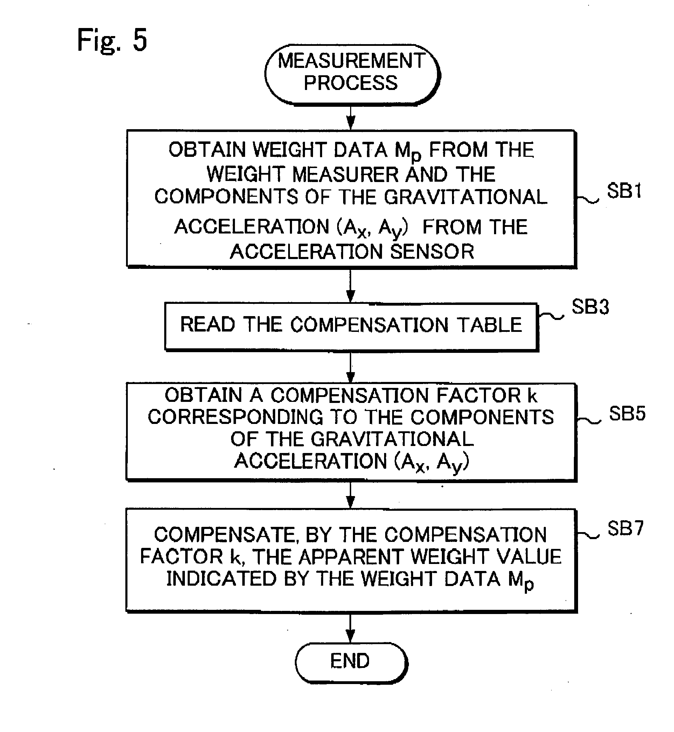

With reference to Fig. 5, the flow of a measurement process for measuring the weight of an object to be weighed in the weighing scale 10A will be described next. The CPU 110 conducts the measurement process according to a computer program (that is, a measurement program). This program may be stored in the memory 150 or another suitable information recording medium (not shown).

The user turns on the power to the weighing scale 10A and places an object to be weighed on the upper planar surface 2a of the platform 2. Then, the measurement program runs so as to execute the measurement process. In the measurement process, the CPU 110 obtains the weight data $M_p$ output from the weight measurer 130 and the components of the gravitational acceleration ($A_x$ and $A_y$) output from the acceleration sensor 120 at step SB1.

Next, the CPU 110 (first compensator) reads the contents stored in the compensation table TBL1 of the memory 150 at step SB3. At step SB5, the CPU 110 calculates a first compensation factor k corresponding to the components of the gravitational acceleration ($A_x$ and $A_y$) that were currently measured by the acceleration sensor 120 and were obtained at step SB1. For this calculation, for example, interpolation may be used. More specifically, the CPU 110 uses at least one interpolating formula to estimate the subject first compensation factor k on the basis of the first compensation factors $k_0$ through $k_4$ and sets of components of the gravitational acceleration ($A_x[0]$, $A_x[+1.5]$, and $A_x[-1.5]$; and $A_y[0]$, $A_y[+1.5]$, and $A_y[-1.5]$) stored in the memory 150 and the current components ($A_x$ and $A_y$) of the gravitational acceleration currently being measured by the acceleration sensor 120. For example, if the current components ($A_x$ and $A_y$) of the gravitational acceleration are ($A_{xl}$ and $A_{yl}$) where $A_x[0] < A_{xl} < A_x[+1.5]$ and $A_{yl} = A_y[0]$, the interpolation formula can be transformed into a simplified form below.

$$k = \{k_0 \times (A_x[+1.5] - A_{x1}) + k_1 \times (A_{x1} - A_x[0])\} \div (A_x[+1.5] - A_x[0])$$

Then, the CPU 110 as the first compensator compensates by the obtained first compensation factor k, the apparent weight value of the object to be weighed indicated by the weight data $M_p$ which was currently being output from the weight measurer and was obtained at step SB1, thereby determining a compensated weight value of the object to be weighed at step SB7. The CPU 110 generates compensated weight data $M_{out1}$ and causes the display 140 to show the compensated weight value indicated by the compensated weight data $M_{out1}$. In this compensation, the apparent weight value may be divided by the first compensation factor when the first compensation factor is the ratio of the apparent weight to the true weight, but the apparent weight value may be multiplied by the first compensation factor when the first compensation factor is the ratio of the true weight to the apparent weight.

Thus, the weighing scale 10A automatically compensates for the inclination-induced error without users having to go through the trouble of making the planar surface level and horizontal by observing the spirit level, and it determines the compensated and precise weight value of the object to be weighed. This is convenient since a troublesome operation for orienting the weighing scale horizontally can be avoided even when the weighing scale is moved and is set up at another location.

In an alternative embodiment, the memory 150 may store a large number of the first compensation factors and a large number of the sets of components of the gravitational acceleration in such a manner that each compensation factor is associated in the memory with a set of components of the gravitational acceleration. In this alternative embodiment, the CPU may choose a first compensation factor corresponding to the components of the gravitational acceleration ($A_x$ and $A_y$) currently measured by the acceleration sensor 120 from among the many first compensation factors stored in the memory 150.

However, in the first embodiment, the weighing scale 10A uses the above-mentioned calculation for estimating the first compensation factor which applies in the compensation as described above. Consequently, a limited number of the first compensation factors and a limited number of the sets of components of the gravitational acceleration may be stored in the memory 150.

It is possible to envisage the contents (first compensation factors and sets of components of the gravitational acceleration) stored in the memory 150 might be measured or determined at another machine, which may be of the same type as that of the present invention. The contents might be transferred from outside of the weighing scale 10A and be written into the memory 150.

However, in the weighing scale 10A according to the first embodiment, the contents originate in this weighing scale 10A and are recorded in the memory 150 in the weighing scale 10A itself in order to eliminate instrumental errors, as will be described later. This recording is preferably conducted in a calibration process at the factory that manufactured the weighing scale 10A or in an experimental laboratory before shipping the weighing scale 10A.

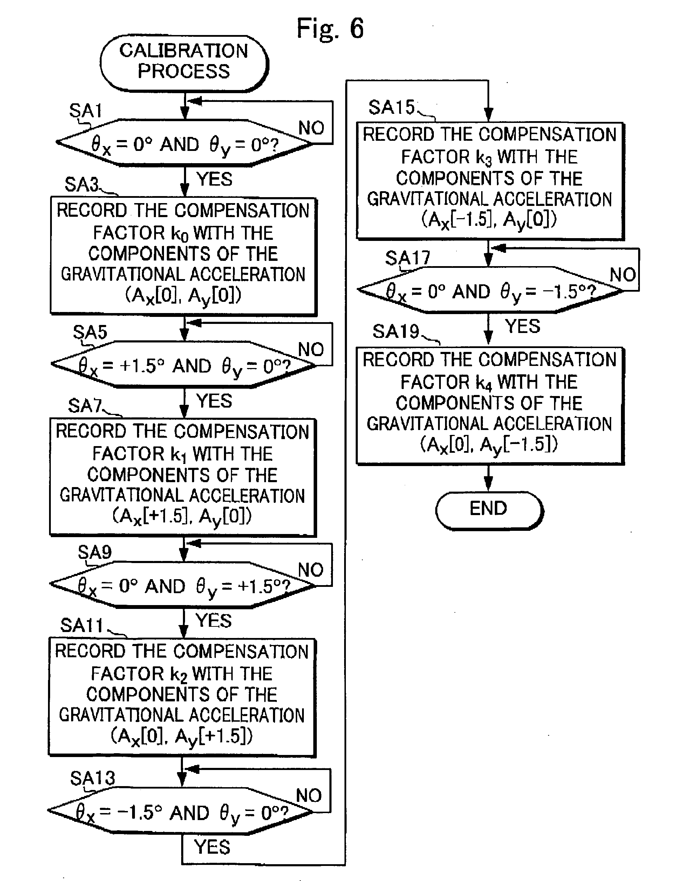

With reference to Fig. 6, the flow of a calibration process for recording the first compensation factors and sets of components of the gravitational acceleration will be described next. The CPU 110 conducts the calibration process according to a computer program (that is, a calibration program). This program may be stored in the memory 150 or another suitable information recording medium (not shown).

In the calibration process, a material for which the true weight value is known is used and is placed on the upper planar surface 2a of the platform 2. The weighing scale 10A is located on a support table by which the weighing scale 10A can be inclined.

First, at step SA1, the CPU 110 waits for a notification that is issued in response to the fact that the weighing scale 10A including the upper planar surface 2a is horizontally oriented so that $(\theta_x, \theta_y) = (0, 0)$. The user should adjust the support table to orient the platform 2 horizontally.

In the calibration process, inclination angles $\theta_x$ and $\theta_y$ may be measured by an external device or instrument. However, inclination angles $\theta_x$ and $\theta_y$ may be calculated by the CPU 110 of the weighing scale 10A on the basis of the components of the gravitational acceleration ($A_x$ and $A_y$) output from the acceleration sensor 120 and displayed in the display 140. Angles $\theta_x$ and $\theta_y$ can be calculated by the following formulae that will be understood from the above description in conjunction with Fig. 3.

$$90 - \theta_x = \cos^{-1}(A_x/g)$$

$$90 - \theta_y = \cos^{-1}(A_y/g)$$

where g is the gravitational acceleration, for example, the actual gravitational acceleration if it is known or the standard gravitational acceleration that is 9.80665 meters per second squared established by the 3rd CGPM (General Conference on Weights and Measures).

Once the angles $(\theta_x, \theta_y)$ are adjusted to be $(0, 0)$, the user gives a notification to the CPU 110. Then, the process proceeds to step SA3 where the CPU 110 (first compensation factor generator) obtains the weight data $M_p$ output from the weight measurer 130 and the components of the gravitational acceleration ($A_x[0]$ and $A_y[0]$) output from the acceleration sensor 120. The CPU 110 calculates a first compensation factor $k_0$ that is the ratio between the true weight value of the material and the apparent weight value of the material indicated by the current weight data $M_p$. The CPU 110 (as the recorder) records the first compensation factor $k_0$ in the compensation table TBL1 in such a manner that the first compensation factor $k_0$ is associated with the set of angles $(\theta_x, \theta_y)$ that is (0, 0). In addition, the CPU 110 records the components of the gravitational acceleration ($A_x[0]$ and $A_y[0]$) in the compensation table TBL1 in such a manner that $A_x[0]$ is associated with angle $\theta_x$ which is zero degrees and that $A_y[0]$ is associated with angle $\theta_y$ which is zero degrees. As a result, the CPU 110 records the first compensation factor $k_0$ with a set of components of the gravitational acceleration ($A_x[0]$ and $A_y[0]$) measured by the acceleration sensor 120 when the planar surface 2a is oriented horizontally.

Subsequently, at step SA5, the CPU 110 waits for a notification that is issued in response to the fact that the weighing scale 10A including the upper planar surface 2a is inclined so that $(\theta_x, \theta_y)$ = (+1.5, 0) (degrees). The user should adjust the support table so that $(\theta_x, \theta_y)$ = (+1.5, 0) (degrees).

Once the angles $(\theta_x, \theta_y)$ are adjusted to be (+1.5, 0), the user gives a notification to the CPU 110. Then, the process proceeds to step SA7 in which the CPU 110 (first compensation factor generator) obtains the weight data $M_p$ output from the weight measurer 130 and the components of the gravitational acceleration ($A_x[+1.5]$ and $A_y[0]$) output from the acceleration sensor 120. The CPU 110 calculates a first compensation factor $k_1$ that is the ratio between the true weight value of the material and the apparent weight value of the material indicated by the current weight data $M_p$. The CPU 110 (as the recorder) records the first compensation factor $k_1$ in the compensation table TBL1 in such a manner that the first compensation factor $k_1$ is associated with the set of angles $(\theta_x, \theta_y)$ that is (+1.5, 0). In addition, the CPU 110 records the component of the gravitational acceleration $A_x[+1.5]$ in the compensation table TBL1 in such a manner that $A_x[+1.5]$ is associated with angle $\theta_x$, which is +1.5 degrees. The other component $A_y[0]$ has been recorded in the compensation table TBL1 appropriately since it was written at step SA3. As a result, the CPU 110 records the first compensation factor $k_1$ with a set of components of the gravitational acceleration ($A_x[+1.5]$ and $A_y[0]$) measured by the acceleration sensor 120 when the planar surface 2a is inclined so that $(\theta_x, \theta_y)$ = (+1.5, 0) (degrees).

Subsequently, at step SA9, the CPU 110 waits for a notification that is issued in response to the fact that the weighing scale 10A including the upper planar surface 2a is inclined so that $(\theta_x, \theta_y)$ = (0, +1.5) (degrees). The user should adjust the support table so that $(\theta_x, \theta_y)$ = (0, + 1. 5) (degrees).

Once the angles $(\theta_x, \theta_y)$ are adjusted to be (0, +1.5), the user gives a notification to the CPU 110. Then, the process proceeds to step SA11 in which the CPU 110 (first compensation factor generator) obtains the weight data $M_p$ output from the weight measurer 130 and the components of the gravitational acceleration ($A_x[0]$ and $A_y[+1.5]$) output from the acceleration sensor 120. The CPU 110 calculates a first compensation factor $k_2$ that is the ratio between the true weight value of the material and the apparent weight value of the material indicated by the current weight data $M_p$. The CPU 110 (as the recorder) records the first compensation factor $k_2$ in the compensation table TBL1 in such a manner that the first compensation factor $k_2$ is associated with the set of angles $(\theta_x, \theta_y)$ that is (0, +1.5). In addition, the CPU 110 records the component of the gravitational acceleration $A_y[+1.5]$ in the compensation table TBL1 in such a manner that $A_y[+1.5]$ is associated with angle $\theta_y$, which is +1.5 degrees. The other component $A_x[0]$ has been recorded in the compensation table TBL1 appropriately since it was written at step SA3. As a result, the CPU 110 records the first compensation factor $k_2$ with a set of components of the gravitational acceleration ($A_x[0]$ and $A_y[+1.5]$) measured by the acceleration sensor 120 when the planar surface 2a is inclined so that $(\theta_x, \theta_y)$ = (0, +1.5) (degrees).

Similarly, by steps SA13 and SA15, another compensation factor $k_3$ is calculated and recorded in the compensation table TBL1 in such a manner that the first compensation factor $k_3$ is associated with the set of angles $(\theta_x, \theta_y)$ that is (-1.5, 0) and with a set of components of the gravitational acceleration ($A_x[-1.5]$ and $A_y[0]$). By steps SA17 and SA19, another compensation factor $k_4$ is calculated and recorded in the compensation table TBL1 in such a manner that the first compensation factor $k_4$ is associated with the set of angles $(\theta_x, \theta_y)$ that is (0, -1.5) and with a set of components of the gravitational acceleration ($A_x[0]$ and $A_y[-1.5]$). Thus, the contents of the compensation table TBL1 in the memory 150 are completed as shown in Fig. 4 before shipping the weighing scale 10A from the factory or the experimental laboratory.

In weighing scales, there may be instrumental errors in weight data $M_p$ resulting from production errors, etc., of the weight measurers 130. Consequently, there is no guarantee that multiple units of the weight measurers 130 of the same type will each output the same measurements under the same conditions. Each of the weight values indicated by the weight data $M_p$ involves an instrumental error in addition to the inclination-induced error. In this embodiment, the weight measurer 130 of the weighing scale 10A actually measures the apparent weight value of a material, and the CPU 110 calculates the first compensation factor on the basis of the true weight value and the apparent weight value actually measured by the weight measurer 130 of the weighing scale 10A. Therefore, by virtue of this embodiment, the instrumental error of the weight measurer 130 may be compensated for in addition to the inclination-induced error.

Furthermore, there may be instrumental errors in outputs of acceleration sensor 120 resulting from production errors, etc., of the acceleration sensors 120. Consequently, there is no guarantee that multiple units of the acceleration sensors 120 of the same type will each output the same measurements under the same conditions. Each components of the gravitational acceleration ($A_x$ and $A_y$) measured by the acceleration sensor 120 involves an instrumental error, in addition to the inclination-induced error. In the calibration process of this embodiment, the CPU 110 records the calculated first compensation factor with a set of components of the gravitational acceleration ($A_x$ and $A_y$) actually measured by the acceleration sensor 120 of the weighing scale 10A, which also measures components of the gravitational acceleration in the measurement process. Therefore, in accordance with this embodiment, the instrumental error of the acceleration sensor 120 may be compensated for in addition to the inclination-induced error.

SECOND EMBODIMENT

A weighing scale of a second embodiment of the present invention includes structures that are the same as those in the first embodiment described in conjunction with Figs. 1 to 3. Therefore, the same reference symbols in the drawings for the first embodiment are applied to corresponding parts in the second embodiment.

The compensation table TBL1, for which the contents have been described in conjunction with Fig. 4, is also stored in the memory 150 in the second embodiment. However, it is not necessary that the components of the gravitational acceleration ($A_x[0]$, $A_x[+1.5]$, and $A_x[-1.5]$; and $A_y[0]$, $A_y[+1.5]$, and $A_y[-1.5]$) be stored in the compensation table TBL1. Referring back to Fig. 4, the compensation table TBL1 in the memory 150 stores first compensation factors $k_0$ through $k_4$ and sets of components of the gravitational acceleration ($A_x$ and $A_y$). Each of the first compensation factors $k_0$ through $k_4$ is the ratio between a true weight value of a material and an apparent weight value of the material which is assumed to be measured by the weight measurer 130 when the planar surface 2a of the platform 2 is inclined at the angle resulting from angles $\theta_x$ and $\theta_y$.

In the compensation table TBL1, each of the first compensation factors $k_0$ through $k_4$ is associated with the angle of inclination of the upper planar surface 2a corresponding to the apparent weight value. For example, factor $k_1$ is associated with the angle resulting from the fact that angle $\theta_x$ is +1.5 degrees and $\theta_y$ is zero degrees, whereas factor $k_4$ is associated with a set of angles ($\theta_x$, $\theta_y$) that are (0, -1.5).

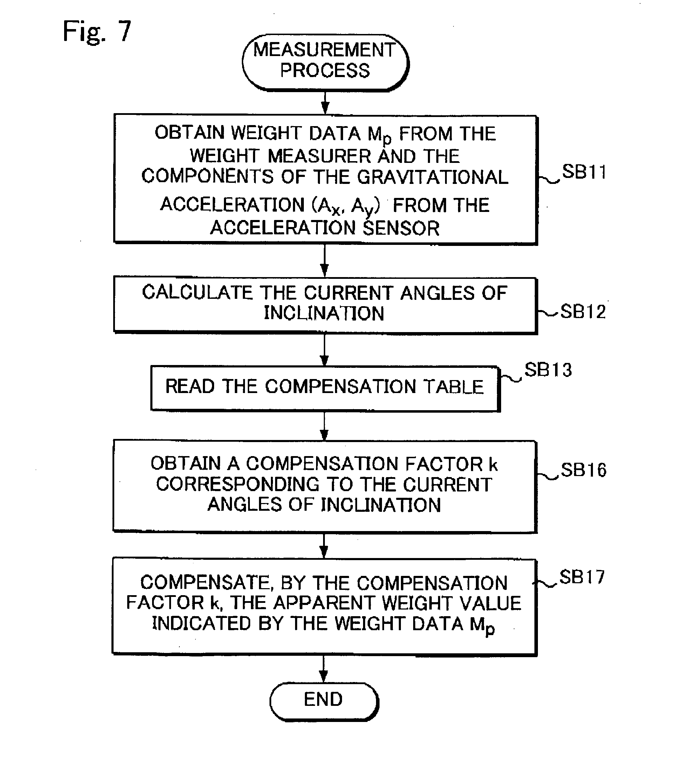

With reference to Fig. 7, the flow of a measurement process for measuring the weight of an object to be weighed in the weighing scale 10A of the second embodiment will be described next. The CPU 110 conducts the measurement process according to a computer program (that is, a measurement program). This program may be stored in the memory 150 or another suitable information recording medium (not shown).

The user turns on the power to the weighing scale 10A and places an object to be weighed on the upper planar surface 2a of the platform 2. Then, the measurement program runs so as to execute the measurement process. In the measurement process, the CPU 110 obtains the weight data $M_p$ output from the weight measurer 130 and the components of the gravitational acceleration ($A_x$ and $A_y$) output from the acceleration sensor 120 at step SB11.

Next, at step SB12, the CPU 110 (as an inclination angle calculator) calculates the current angles of inclination ($\theta_x$ and $\theta_y$) of the planar surface 2a of the platform 2 on the basis of the components of the gravitational acceleration ($A_x$ and $A_y$) currently measured by the acceleration sensor 120. It should be noted that angles $\theta_x$ and $\theta_y$ can be calculated by the following formulae as described above.

$$90 - \theta_x = \cos^{-1}(A_x/g)$$

$$90 - \theta_y = \cos^{-1}(A_y/g)$$

Next, the CPU 110 (first compensator) reads the contents stored in the compensation table TBL1 of the memory 150 at step SB13. At step SB16, the CPU 110 calculates a first compensation factor k corresponding to the current angles of inclination ($\theta_x$ and $\theta_y$) of the planar surface 2a that were currently calculated at step SB12. For this calculation, for example, interpolation may be used. More specifically, the CPU 110 uses at least one interpolating formula to estimate the subject first compensation factor k on the basis of the first compensation factors $k_0$ through $k_4$ and sets of angles of inclination (where $\theta_x$ = 0, +1.5, or -1.5; and $\theta_y$ = 0, +1.5, or -1.5) stored in the memory 150 and the current angles of inclination ($\theta_x$ and $\theta_y$) currently calculated by the CPU 110.

Then, the CPU 110 as the first compensator compensates, by the obtained first compensation factor k, the apparent weight value of the object to be weighed indicated by the weight data $M_p$ which was currently output from the weight measurer and was obtained at step SB11 in a manner similar to that in the first embodiment, thereby determining a compensated weight value of the object to be weighed at step SB 17. The CPU 110 generates compensated weight data $M_{out1}$ and causes the display 140 to show the compensated weight value indicated by the compensated weight data $M_{out1}$.

Thus, the weighing scale 10A automatically compensates for the inclination-induced error without users having to go through the trouble of making the planar surface level and horizontal by observing the spirit level, and it determines the compensated and precise weight value of the object to be weighed. This is convenient since a troublesome operation for orienting the weighing scale horizontally can be avoided even when the weighing scale is moved and is set up at another location.

In an alternative embodiment, the memory 150 may store a large number of the first compensation factors and a large number of the angles of inclination in such a manner that each compensation factor is associated in the memory with a set of the angles of inclination. In this alternative embodiment, the CPU may choose a first compensation factor corresponding to the angles of inclination currently calculated from among the many first compensation factors stored in the memory 150.

However, in the second embodiment, the weighing scale 10A uses the above-mentioned calculation for estimating the first compensation factor that applies in the compensation as described above. Consequently, a limited number of the first compensation factors and a limited number of the sets of angles may be stored in the memory 150.

It is possible to conceive of the contents (first compensation factors and sets of angles of inclination) stored in the memory 150 might be measured or determined at another machine, which may be of the same type as that of the present invention. The contents might be transferred from outside of the weighing scale 10A and be written into the memory 150.

However, in the weighing scale 10A according to the second embodiment, the contents originate in this weighing scale 10A and are recorded in the memory 150 in the weighing scale 10A itself in order to eliminate instrumental errors, as will be described later. This recording is preferably conducted in a calibration process at the factory that manufactured the weighing scale 10A or in an experimental laboratory before shipping the weighing scale 10A. The calibration process in the second embodiment may be the same as that described with reference to Fig. 6 in conjunction with the first embodiment, but it may also be different from that in the first embodiment, as described below.

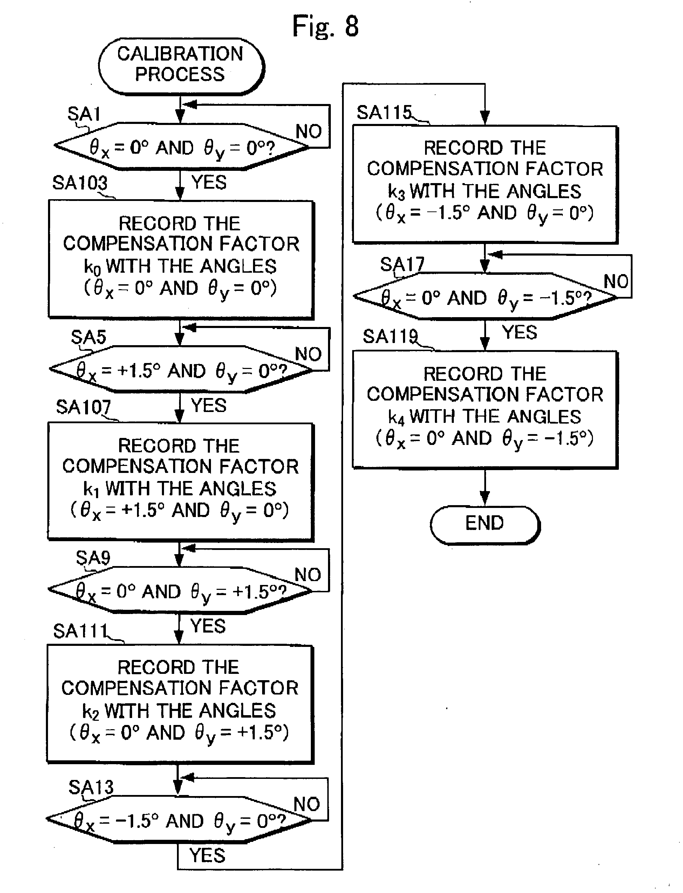

With reference to Fig. 8, the flow of a calibration process for recording the first compensation factors and sets of sets of angles of inclination in the second embodiment will be described next. The CPU 110 conducts the calibration process according to a computer program (that is, a calibration program) in a manner similar to that in the first embodiment.

Fig. 8 is similar to Fig. 6, but it differs from Fig. 6 of the first embodiment in that steps SA3, SA7, SA11, SA15, and SA19 are replaced by SA103, SA107, SA111, SA115, and SA119.

At step SA103, the CPU 110 (first compensation factor generator) obtains the weight data $M_p$ output from the weight measurer 130. The CPU 110 calculates a first compensation factor $k_0$ that is the ratio between the true weight value of the material and the apparent weight value of the material indicated by the current weight data $M_p$. The CPU 110 (as the recorder) records the first compensation factor $k_0$ in the compensation table TBL1 in such a manner that the first compensation factor $k_0$ is associated with the set of angles $(\theta_x, \theta_y)$ that is (0, 0).

At step SA107, the CPU 110 (first compensation factor generator) obtains the weight data $M_p$ output from the weight measurer 130. The CPU 110 calculates a first compensation factor $k_1$ that is the ratio between the true weight value of the material and the apparent weight value of the material indicated by the current weight data $M_p$. The CPU 110 (as the recorder) records the first compensation factor $k_1$ in the compensation table TBL1 in such a manner that the first compensation factor $k_j$ is associated with the set of angles $(\theta_x, \theta_y)$.

At step SA111, the CPU 110 (first compensation factor generator) obtains the weight data $M_p$ output from the weight measurer 130. The CPU 110 calculates a first compensation factor $k_2$ that is the ratio between the true weight value of the material and the apparent weight value of the material indicated by the current weight data $M_p$. The CPU 110 (as the recorder) records the first compensation factor $k_2$ in the compensation table TBL1 in such a manner that the first compensation factor $k_2$ is associated with the set of angles $(\theta_x, \theta_y)$ that is (0, +1.5).

Similarly, by steps SA13 and SA115, another compensation factor $k_3$ is calculated and recorded in the compensation table TBL1 in such a manner that the first compensation factor $k_3$ is associated with the set of angles $(\theta_x, \theta_y)$ that is (-1.5, 0). By steps SA17 and SA119, another compensation factor $k_4$ is calculated and recorded in the compensation table TBL1 in such a manner that the first compensation factor $k_4$ is associated with the set of angles $(\theta_x, \theta_y)$ that is (0, -1.5). Thus, the contents of the compensation table TBL1 in the memory 150 are completed before shipping the weighing scale 10A from the factory or the experimental laboratory.

In this embodiment, the weight measurer 130 of the weighing scale 10A actually measures the apparent weight value of a material, and the CPU 110 calculates the first compensation factor on the basis of the true weight value and the apparent weight value actually measured by the weight measurer 130 of the weighing scale 10A. Therefore, by virtue of this embodiment, the instrumental error of the weight measurer 130 may be compensated for in addition to the inclination-induced error.

Furthermore, in the calibration process of this embodiment, the CPU 110 records the calculated first compensation factor with a set of angles calculated on the basis of a set of components of the gravitational acceleration ($A_x$ and $A_y$) actually measured by the acceleration sensor 120 of the weighing scale 10A, which also measures components of the gravitational acceleration in the measurement process. Therefore, in accordance with this embodiment, the instrumental error of the acceleration sensor 120 may be compensated for in addition to the inclination-induced error.

THIRD EMBODIMENT

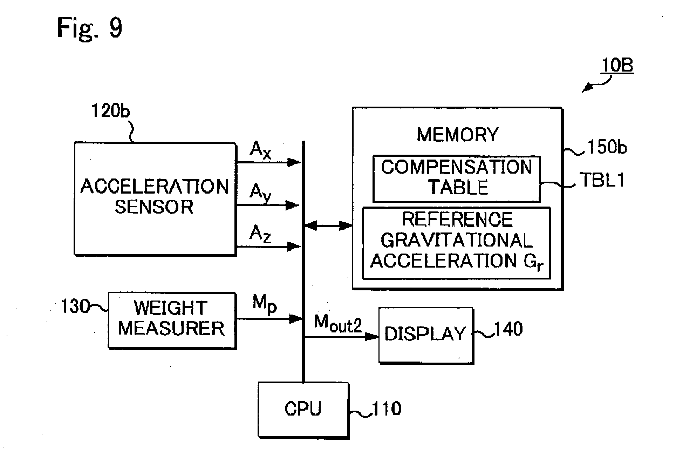

Next, with reference to Fig. 9, a third embodiment of the present invention will be described. In the third embodiment, the gravitational error resulting from location-dependent differences in gravitational acceleration can be excluded automatically. In Fig. 9, the same symbols are used to designate elements that are substantially the same as in Fig. 1, and these elements will not be described in detail.

As shown in Fig. 9, the weighing scale 10B in the third embodiment includes a second acceleration sensor 120b of a triaxial type that can measure accelerations $A_x$, $A_y$, and $A_z$ in the x, y, and z directions. In a manner similar to that in the first and second embodiments, on the basis of the components of the gravitational acceleration ($A_x$ and $A_y$), the inclination-induced error can be eliminated in the third embodiment. In addition, the weighing scale 10B calculates the actual gravitational acceleration exerted on the weighing scale on the basis of the three components of the gravitational acceleration ($A_x$, $A_y$, and $A_z$) actually measured by the acceleration sensor 120b. The actual gravitational acceleration thus calculated is used for compensating for the gravitational error.

More specifically, the actual gravitational acceleration $g_a$ exerted on the weighing scale is the square root of the sum of the squares of the three components of the gravitational acceleration ($A_x$, $A_y$, and $A_z$) measured by the acceleration sensor 120b as represented in the formula below.

$$g_a = (A_x{}^2 + A_y{}^2 + A_z{}^2)^{1/2}$$

In this embodiment, the second acceleration sensor 120b is used for measuring two components of the gravitational acceleration ($A_x$ and $A_y$) to compensate for the inclination-induced error, and for measuring three components of the gravitational acceleration ($A_x$, $A_y$, and $A_z$) to calculate the actual gravitational acceleration. In an alternative embodiment, two acceleration sensors may be used for these two purposes, respectively.

The weighing scale 10B further includes a memory 150b that stores the compensation table TBL1 that has been described in conjunction with the first and second embodiments. In addition, the memory 150b stores a reference gravitational acceleration $G_r$ at a reference point. The reference gravitational acceleration $G_r$ may be the standard gravitational acceleration that is 9.80665 meters per second squared at a location at sea-level at latitude 45 degrees north. However, in this embodiment, the reference gravitational acceleration $G_r$ is determined on the basis of three components of the gravitational acceleration measured by the acceleration sensor 120b in a calibration process conducted at the factory that manufactured the weighing scale 10A or in an experimental laboratory. The reference gravitational acceleration $G_r$ is calculated as follows:

$$G_r = (A_{xr}{}^2 + A_{yr}{}^2 + A_{zr}{}^2)^{1/2}$$

in which $A_{xr}$, $A_{yr}$, and $A_{zr}$ are three components of the gravitational acceleration measured by the acceleration sensor 120b at the reference point.

The apparent weight value of an object to be weighed on the platform 2 that is indicated by the weight data $M_p$ output from the weight measurer 130 is affected by the gravitational error. This is because gravitational acceleration varies slightly depending on location on the Earth. For example, it varies with latitude, longitude, elevation, and subsurface density. The gravitational error can be assumed for individual locations and can be eliminated from the measured weight in accordance with a user setting of the weighing scale. However, whenever the weighing scale is moved and is set up at another location, this setting was previously necessary to achieve accurate measurements. In order to avoid this easily overlooked and troublesome setting, in this embodiment, the weight value that originated from the weight measurer 130 is corrected for by the ratio between the reference gravitational acceleration $G_r$ and the actual gravitational acceleration $g_a$ at the location at which the weighing scale 10B is to be used. Therefore, the gravitational error can be automatically subtracted without a user setting the weighing scale, even when the weighing scale 10B is used at different locations.

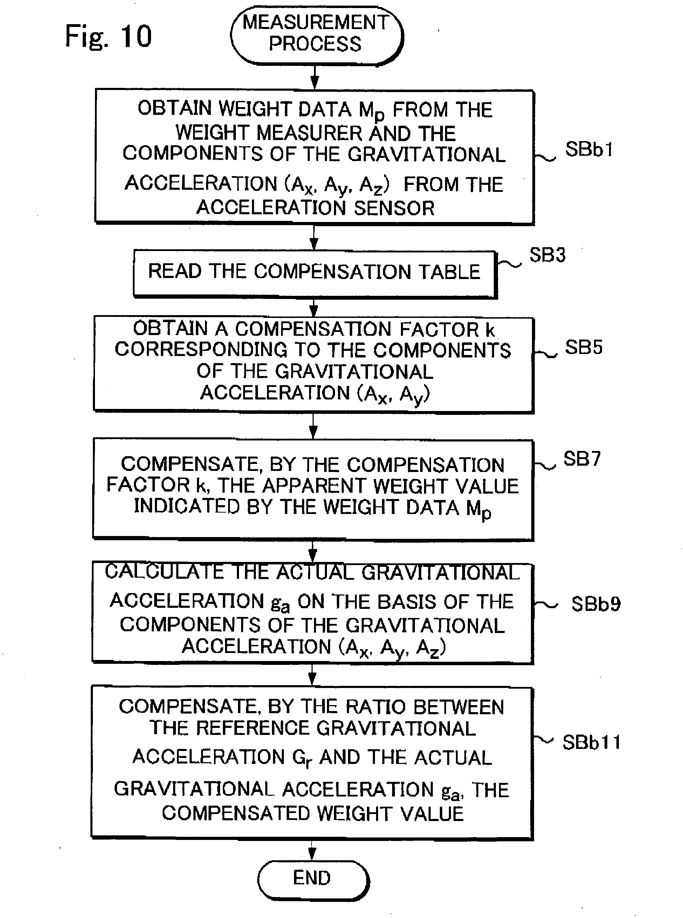

Fig. 10 is a flowchart representing the flow of a measurement process for measuring the weight of an object to be weighed according to the third embodiment. The CPU 110 conducts the measurement process according to a computer program (that is, a measurement program). This program may be stored in the memory 150b or another suitable information recording medium (not shown).

In a manner similar to that of the measurement process of the first embodiment, when the user turns on the power to the weighing scale 10A and places an object to be weighed on the upper planar surface 2a of the platform 2, the measurement program runs so as to execute the measurement process. At step SBb1, the CPU 110 obtains the

weight data $M_p$ output from the weight measurer 130 and three components of the gravitational acceleration ($A_x$, $A_y$, and $A_z$) output from the acceleration sensor 120. Then, in a manner similar to that of the measurement process of the first embodiment, the process proceeds to steps SB3 through SB7, whereby the CPU 110 compensates for the inclination-induced error and determines a compensated weight value of the object to be weighed, but this compensated weight value will not be displayed on the display 140.

Thereafter, at step SBb9, the CPU 110 serves as a gravitational acceleration calculator for calculating the actual gravitational acceleration $g_a$ exerted on the weighing scale, which is the square root of the sum of the squares of the three components of the gravitational acceleration ($A_x$, $A_y$, and $A_z$) measured by the acceleration sensor 120. This actual gravitational acceleration $g_a$ is the actual gravitational acceleration at this measurement location.

At step SBb11, the CPU 110 serves as a second compensator for calculating a second compensation factor that is the ratio between the reference gravitational acceleration $G_r$ stored in the memory 150b and the actual gravitational acceleration $g_a$ at the measurement location. The second compensation factor may be calculated as $G_r/g_a$ or $g_a/G_r$. Then, the CPU 110 (second compensator) compensates, by the second compensation factor, the compensated weight value determined at step SB7, thereby determining a second compensated weight value of the object to be weighed. The CPU 110 generates second compensated weight data $M_{ont2}$ indicating the compensated weight value and causes the display 140 to show the second compensated weight value indicated by the second compensated weight data $M_{out2}$. In this compensation, the first compensated weight value may be multiplied by the second compensation factor when the second compensation factor is $G_r/g$, but the first compensated weight value may be divided by the second compensation factor when the second compensation factor is $g_u/G_r$. Thus, the weighing scale 10A automatically conducts the measurement process including the inclination compensation and the gravity compensation without the process being troublesome for the user.

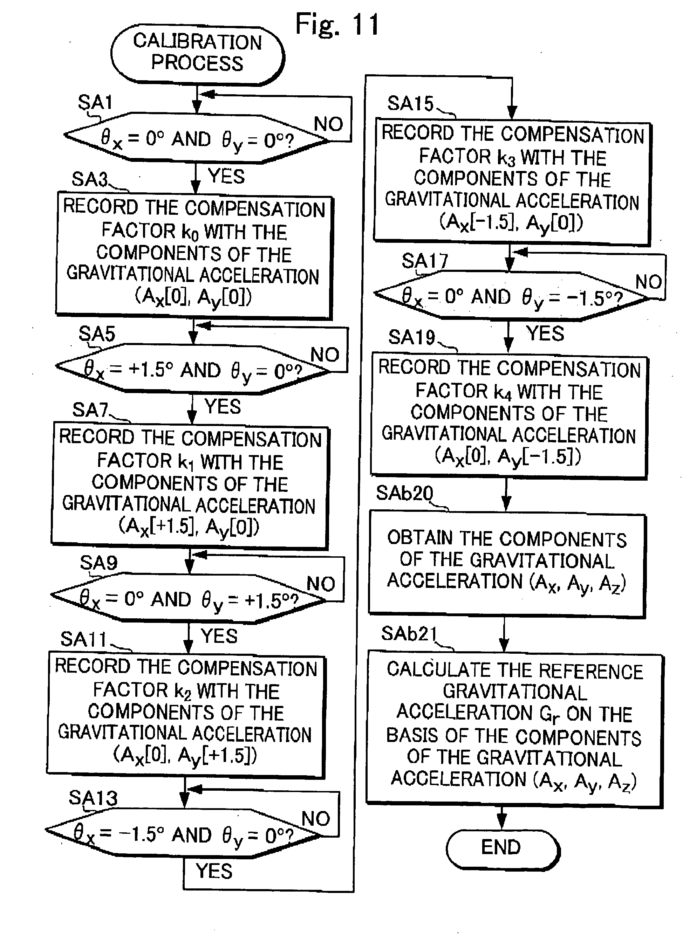

Fig. 11 is a flowchart representing the flow of a calibration process according to the third embodiment. The CPU 110 conducts the calibration process according to a computer program (that is, a calibration program). This program may be stored in the memory 150b or another suitable information recording medium (not shown).

In a manner similar to that of the calibration process of the first embodiment, the process proceeds to steps SA1 through SA19, whereby the contents of the compensation table TBL1 in the memory 150b are completed at the factory or the experimental laboratory.

Thereafter, at step SAb20, the CPU 110 obtains the three components of the gravitational acceleration ($A_x$, $A_y$, $A_z$) simultaneously measured by the acceleration sensor 120. At step SAb21, the CPU 110 serves as a reference gravitational acceleration calculator for calculating the reference gravitational acceleration $G_r$. More specifically, the reference gravitational acceleration $G_r$ is the square root of the sum of the squares of the three components of the gravitational acceleration ($A_x$, $A_y$, $A_z$). It should be noted the components ($A_x$, $A_y$, $A_z$) at this stage are three components of the reference gravitational acceleration ($A_{xr}$, $A_{yr}$, $A_{zr}$). Thus, the contents of the compensation table TBL1 in the memory 150b are completed and the reference gravitational acceleration $G_r$ is stored in the memory 150b before shipping the weighing scale 10A from the factory or the experimental laboratory.

As will be understood from the above description, in addition to the advantages of the first embodiment, the third embodiment may have an advantage that the gravity compensation can be achieved automatically without the process being troublesome for the user.

MODIFICATIONS AND ALTERATIONS

In the third embodiment, the calibration process includes the calculation of the reference gravitational acceleration $G_r$. However, the calibration process and the calculation of the reference gravitational acceleration $G_r$ may be conducted in accordance with different computer programs, respectively.

As described above, the third embodiment is a modification of the first embodiment. However, the same modification can be applied to the second embodiment as well.

The third embodiment employs the inclination compensation and the gravity compensation. However, it is possible to have the weighing scale conduct the above-described gravity compensation, but not conduct the inclination compensation.

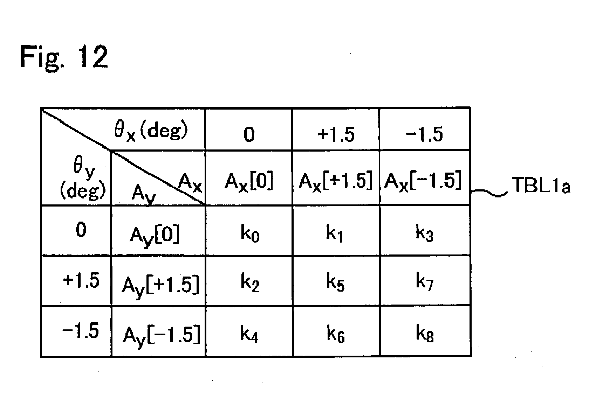

Fig. 12 is a table showing an example of contents of another compensation table TBL1a in a modified embodiment. In the compensation table TBL1 shown in Fig. 4, only the five first compensation factors $k_0$ through $k_4$ are stored. The compensation table TBL1a shown in Fig. 7 stores four additional first compensation factors $k_5$ through $k_8$. The factor $k_5$ corresponds to the set of angles ($\theta_x$, $\theta_y$) that is (+1.5, +1.5). The factor $k_6$ corresponds to the set of angles ($\theta_x$, $\theta_y$) that is (+1.5, -1.5). The factor $k_7$ corresponds to the set of angles ($\theta_x$, $\theta_y$) that is (-1.5, +1.5). The factor $k_8$ corresponds to the set of angles ($\theta_x$, $\theta_y$) that is (-1.5, -1.5).

The compensation table TBL1a can be used instead of the compensation table TBL1 in the first through third embodiments. However, it is not necessary that the components of the gravitational acceleration ($A_x[0]$, $A_x[+1.5]$, and $A_x[-1.5]$; and $A_y[0]$, $A_y[+1.5]$, and $A_y[-1.5]$) be stored in the compensation table TBL1 as in the second embodiment and modifications of the second embodiment. By using the compensation table TBL1a, it is possible to the improve accuracy of the interpolation.

Other suitable modifications may be adopted for improving the accuracy of interpolation. For example, the compensation table may store more compensation factors corresponding to more sets of angles ($\theta_x$, $\theta_y$) in which each of $\theta_x$ and $\theta_y$ can take intermediate values between zero and +1.5 and between zero and -1.5.

In each of the above-described embodiments, the CPU 110 of the weighing scale executes the calibration process for completing the compensation table (and for calculating the reference gravitational acceleration $G_r$). However, it is possible for another processing machine to be connected to the weight measurer 130 so as to perceive the true weight value output from the weight measurer 130, and this processing machine calculates each first compensation factor k on the basis of the output from the weight measurer 130 and the true weight value. The processing machine may also be connected to the acceleration sensor 120 so as to perceive the components of the gravitational acceleration output from the acceleration sensor 120. In this case, the processing machine can complete the contents of the compensation table and can calculate the reference gravitational acceleration $G_r$. These data can be transferred from the processing machine to the weighing scale and be written into the memory. Although these data are calculated at an external processing machine, they originated from the weighing scale per se, and they contribute to the reduction in instrumental errors.

In each of the above-described embodiments, the components of the gravitational acceleration ($A_x$ and $A_y$) output from the acceleration sensor 120 are measured so as to be used as the bases for determining the current first compensation factor that is used for compensating the inclination-induced error in the measurement process. However, it is not intended to so limit the present invention. Alternatively, the components ($A_x$ and $A_z$) or ($A_y$ and $A_z$) may be measured to be utilized for determining the current first compensation factor. This is because $A_y$ is a function of $A_x$ and $A_z$, and $A_x$ is also a function of $A_y$ and $A_z$ by the following formula when the gravitational acceleration $g_a$, is considered to be a known constant.

$$g_a = (A_x{}^2 + A_y{}^2 + A_z{}^2)^{1/2}$$

**Claims**

1. A weighing scale (10A, 10B) comprising:

   a platform (2) comprising a planar surface (2a) on which an object to be weighed, having a weight, is placed;
   a weight measurer (130) for outputting weight data indicating an apparent weight value of the object to be weighed on the planar surface of the platform, the apparent weight value being affected by inclination of the planar surface;
   an acceleration sensor (120, 120b)) for measuring at least two components of the gravitational acceleration exerted on the weighing scale in at least two directions that are orthogonal to each other; and
   a first compensator (110) which compensates, on the basis of the at least two components of the gravitational acceleration currently being measured by the acceleration sensor, the apparent weight value of the object to be weighed indicated by the weight data currently being output from the weight measurer, thereby determining a compensated weight value of the object to be weighed.

2. The weighing scale according to claim 1, further comprising a memory (150, 150b) for storing first compensation factors ($k_1$-$k_8$), each of the first compensation factors being a ratio between a true weight value of a material and an apparent weight value of the material which is assumed to be measured by the weight measurer when the planar surface is inclined at an angle,
   the first compensator (110) referring to the memory for obtaining a first compensation factor (k) corresponding to the components of the gravitational acceleration ($A_x$, $A_y$) currently being measured by the acceleration sensor, the first compensator compensating, by the obtained first compensation factor, the apparent weight value of the object to be weighed indicated by the weight data currently being output from the weight measurer, thereby determining a compensated weight value of the object to be weighed.

3. The weighing scale according to claim 2, wherein the memory (150, 150b) stores the first compensation factors ($k_1$-$k_8$) and sets of components of the gravitational acceleration ($A_x$, $A_y$), each of the sets of components of the gravitational acceleration having at least two components of the gravitational acceleration that are assumed to be exerted on the weighing scale in at least two orthogonal directions when the planar surface is inclined at an angle, each of the first compensation factors being associated in the memory with a set of components of the gravitational acceleration that are assumed to be exerted on the weighing scale when the planar surface is inclined at the angle corresponding to the apparent weight value of the material.

4. The weighing scale according to claim 3, wherein the first compensator (110) interpolates the first compensation factor (k) corresponding to the components of the gravitational acceleration currently being measured by the acceleration sensor, on the basis of the first compensation factors and sets of components of the gravitational acceleration stored in the memory and the components of the gravitational acceleration currently being measured by the acceleration sensor.

5. The weighing scale according to claim 3 or 4, further comprising a first compensation factor generator (110) and a recorder (110), the first compensation factor generator receiving, from the weight measurer, weight data indicating the apparent weight value of the material on the planar surface of the platform the weight measurer when the planar surface is inclined at an angle, the first compensation factor generator calculates a first compensation factor that is a ratio between the true weight value of the material and the apparent weight value of the material, the recorder recording the first compensation factor calculated by the first compensation factor generator with a set of components of the gravitational acceleration measured by the acceleration sensor when the planar surface is inclined at the angle at which the first compensation factor generator receives, from the weight measurer, the weight data indicating the apparent weight value of the material.

6. The weighing scale according to claim 2, wherein the memory (150, 150b) stores the first compensation factors ($k_1$-$k_8$) and angles ($\theta_x$, $\theta_y$) of inclination of the planar surface, each of the first compensation factors being associated in the memory with the angle of inclination of the planar surface corresponding to the apparent weight value of the material;

the weighing scale further comprising an inclination angle calculator (110) for calculating a current angle of inclination of the planar surface on the basis of the components of the gravitational acceleration currently being measured by the acceleration sensor;

the first compensator (110) referring to the memory for obtaining a first compensation factor (k) corresponding to the current angle of inclination of the planar surface calculated by the inclination angle calculator, the first compensator compensating, by the obtained first compensation factor, the apparent weight value of the object to be weighed indicated by the weight data currently being output from the weight measurer, thereby determining a compensated weight value of the object to be weighed.

7. The weighing scale according to claim 6, wherein the first compensator (110) interpolates the first compensation factor corresponding to the current angle of inclination of the planar surface currently calculated by the inclination angle calculator, on the basis of the first compensation factors and angles of inclination of the planar surface stored in the memory and the current angle of inclination of the planar surface currently calculated by the inclination angle calculator.

8. The weighing scale according to claim 6 or 7, further comprising a first compensation factor generator (110) and a recorder (110), the first compensation factor generator receiving, from the weight measurer, weight data indicating the apparent weight value of the material on the planar surface of the platform the weight measurer when the planar surface is inclined at an angle, the first compensation factor generator calculates a first compensation factor that is a ratio between the true weight value of the material and the apparent weight value of the material, the recorder recording the first compensation factor calculated by the first compensation factor generator with the angle calculated by the inclination angle calculator at which the first compensation factor generator receives, from the weight measurer, the weight data indicating the apparent weight value of the material.

9. The weighing scale according to any one of claims 1 to 8, wherein the memory (150b) stores a reference gravitational acceleration ($G_r$) at a reference point,
the weighing scale comprising:

a second acceleration sensor (120b) measuring three components of the gravitational acceleration ($A_x$, $A_y$, $A_z$) exerted on the weighing scale in three directions that are orthogonal to one another;
a gravitational acceleration calculator for calculating an actual gravitational acceleration ($g_a$) exerted on the weighing scale that is the square root of the sum of the squares of the three components of the gravitational acceleration measured by the second acceleration sensor; and
a second compensator (110) for calculating a second compensation factor that is a ratio between the reference gravitational acceleration and the actual gravitational acceleration, and for compensating, by the second compensation factor, the compensated weight value determined by the first compensator, thereby determining a second compensated weight value of the object to be weighed.

## Fig. 1A

## Fig. 1B

## Fig. 2

## Fig. 3

## Fig. 4

| θ_x (deg) | | 0 | +1.5 | −1.5 |
|---|---|---|---|---|
| θ_y (deg) | A_y \ A_x | $A_x[0]$ | $A_x[+1.5]$ | $A_x[-1.5]$ |
| 0 | $A_y[0]$ | $k_0$ | $k_1$ | $k_3$ |
| +1.5 | $A_y[+1.5]$ | $k_2$ | — | — |
| −1.5 | $A_y[-1.5]$ | $k_4$ | — | — |

TBL1

## Fig. 5

```
        ┌─────────────────────┐
        │    MEASUREMENT      │
        │      PROCESS        │
        └─────────────────────┘
                  │
                  ▼
```

OBTAIN WEIGHT DATA $M_p$ FROM THE WEIGHT MEASURER AND THE COMPONENTS OF THE GRAVITATIONAL ACCELERATION $(A_x, A_y)$ FROM THE ACCELERATION SENSOR ⟩~ SB1

READ THE COMPENSATION TABLE ⟩~ SB3

OBTAIN A COMPENSATION FACTOR k CORRESPONDING TO THE COMPONENTS OF THE GRAVITATIONAL ACCELERATION $(A_x, A_y)$ ⟩~ SB5

COMPENSATE, BY THE COMPENSATION FACTOR k, THE APPARENT WEIGHT VALUE INDICATED BY THE WEIGHT DATA $M_p$ ⟩~ SB7

```
        ┌─────────────────────┐
        │        END          │
        └─────────────────────┘
```

## Fig. 6

```
        ┌─────────────────┐
        │  CALIBRATION    │
        │    PROCESS      │
        └─────────────────┘
```

SA1

$\theta_x = 0°$ AND $\theta_y = 0°$? — NO

↓ YES

SA3

RECORD THE COMPENSATION FACTOR $k_0$ WITH THE COMPONENTS OF THE GRAVITATIONAL ACCELERATION $(A_x[0], A_y[0])$

SA5

$\theta_x = +1.5°$ AND $\theta_y = 0°$? — NO

↓ YES

SA7

RECORD THE COMPENSATION FACTOR $k_1$ WITH THE COMPONENTS OF THE GRAVITATIONAL ACCELERATION $(A_x[+1.5], A_y[0])$

SA9

$\theta_x = 0°$ AND $\theta_y = +1.5°$? — NO

↓ YES

SA11

RECORD THE COMPENSATION FACTOR $k_2$ WITH THE COMPONENTS OF THE GRAVITATIONAL ACCELERATION $(A_x[0], A_y[+1.5])$

SA13

$\theta_x = -1.5°$ AND $\theta_y = 0°$? — NO

↓ YES

SA15

RECORD THE COMPENSATION FACTOR $k_3$ WITH THE COMPONENTS OF THE GRAVITATIONAL ACCELERATION $(A_x[-1.5], A_y[0])$

SA17

$\theta_x = 0°$ AND $\theta_y = -1.5°$? — NO

↓ YES

SA19

RECORD THE COMPENSATION FACTOR $k_4$ WITH THE COMPONENTS OF THE GRAVITATIONAL ACCELERATION $(A_x[0], A_y[-1.5])$

```
        ┌─────────┐
        │   END   │
        └─────────┘
```

# Fig. 7

```
┌─────────────────────┐
│   MEASUREMENT       │
│     PROCESS         │
└─────────────────────┘
          │
          ▼
┌──────────────────────────────────┐
│ OBTAIN WEIGHT DATA M_p FROM THE   │
│   WEIGHT MEASURER AND THE         │
│ COMPONENTS OF THE GRAVITATIONAL   │── SB11
│ ACCELERATION (A_x, A_y) FROM THE  │
│   ACCELERATION SENSOR             │
└──────────────────────────────────┘
          │
          ▼
┌──────────────────────────────────┐
│ CALCULATE THE CURRENT ANGLES OF   │── SB12
│          INCLINATION              │
└──────────────────────────────────┘
          │
          ▼
┌──────────────────────────────────┐── SB13
│   READ THE COMPENSATION TABLE     │
└──────────────────────────────────┘
          │
          ▼
┌──────────────────────────────────┐
│ OBTAIN A COMPENSATION FACTOR k    │
│ CORRESPONDING TO THE CURRENT      │── SB16
│   ANGLES OF INCLINATION           │
└──────────────────────────────────┘
          │
          ▼
┌──────────────────────────────────┐── SB17
│ COMPENSATE, BY THE COMPENSATION   │
│ FACTOR k, THE APPARENT WEIGHT VALUE│
│ INDICATED BY THE WEIGHT DATA M_p  │
└──────────────────────────────────┘
          │
          ▼
      ┌─────────┐
      │   END   │
      └─────────┘
```

## Fig. 8

CALIBRATION PROCESS

SA1
$\theta_x = 0°$ AND $\theta_y = 0°$? — NO

YES

SA103
RECORD THE COMPENSATION FACTOR $k_0$ WITH THE ANGLES ($\theta_x = 0°$ AND $\theta_y = 0°$)

SA5
$\theta_x = +1.5°$ AND $\theta_y = 0°$? — NO

YES

SA107
RECORD THE COMPENSATION FACTOR $k_1$ WITH THE ANGLES ($\theta_x = +1.5°$ AND $\theta_y = 0°$)

SA9
$\theta_x = 0°$ AND $\theta_y = +1.5°$? — NO

YES

SA111
RECORD THE COMPENSATION FACTOR $k_2$ WITH THE ANGLES ($\theta_x = 0°$ AND $\theta_y = +1.5°$)

SA13
$\theta_x = -1.5°$ AND $\theta_y = 0°$? — NO

YES

SA115
RECORD THE COMPENSATION FACTOR $k_3$ WITH THE ANGLES ($\theta_x = -1.5°$ AND $\theta_y = 0°$)

SA17
$\theta_x = 0°$ AND $\theta_y = -1.5°$? — NO

YES

SA119
RECORD THE COMPENSATION FACTOR $k_4$ WITH THE ANGLES ($\theta_x = 0°$ AND $\theta_y = -1.5°$)

END

Fig. 9

120b

10B

ACCELERATION
SENSOR

$A_x$

$A_y$

$A_z$

MEMORY

COMPENSATION
TABLE

150b

TBL1

REFERENCE
GRAVITATIONAL
ACCELERATION $G_r$

130 WEIGHT
MEASURER

$M_p$

$M_{out2}$

DISPLAY 140

CPU 110

Fig. 10

$$\left(\begin{array}{c} \text{MEASUREMENT} \\ \text{PROCESS} \end{array}\right)$$

OBTAIN WEIGHT DATA $M_p$ FROM THE WEIGHT MEASURER AND THE COMPONENTS OF THE GRAVITATIONAL ACCELERATION $(A_x, A_y, A_z)$ FROM THE ACCELERATION SENSOR — SBb1

READ THE COMPENSATION TABLE — SB3

OBTAIN A COMPENSATION FACTOR k CORRESPONDING TO THE COMPONENTS OF THE GRAVITATIONAL ACCELERATION $(A_x, A_y)$ — SB5

COMPENSATE, BY THE COMPENSATION FACTOR k, THE APPARENT WEIGHT VALUE INDICATED BY THE WEIGHT DATA $M_p$ — SB7

CALCULATE THE ACTUAL GRAVITATIONAL ACCELERATION $g_a$ ON THE BASIS OF THE COMPONENTS OF THE GRAVITATIONAL ACCELERATION $(A_x, A_y, A_z)$ — SBb9

COMPENSATE, BY THE RATIO BETWEEN THE REFERENCE GRAVITATIONAL ACCELERATION $G_r$ AND THE ACTUAL GRAVITATIONAL ACCELERATION $g_a$, THE COMPENSATED WEIGHT VALUE — SBb11

END

# Fig. 11

CALIBRATION PROCESS

SA1
$\theta_x = 0°$ AND $\theta_y = 0°$? — NO

↓ YES

SA3
RECORD THE COMPENSATION FACTOR $k_0$ WITH THE COMPONENTS OF THE GRAVITATIONAL ACCELERATION $(A_x[0], A_y[0])$

SA5
$\theta_x = +1.5°$ AND $\theta_y = 0°$? — NO

↓ YES

SA7
RECORD THE COMPENSATION FACTOR $k_1$ WITH THE COMPONENTS OF THE GRAVITATIONAL ACCELERATION $(A_x[+1.5], A_y[0])$

SA9
$\theta_x = 0°$ AND $\theta_y = +1.5°$? — NO

↓ YES

SA11
RECORD THE COMPENSATION FACTOR $k_2$ WITH THE COMPONENTS OF THE GRAVITATIONAL ACCELERATION $(A_x[0], A_y[+1.5])$

SA13
$\theta_x = -1.5°$ AND $\theta_y = 0°$? — NO

↓ YES

SA15
RECORD THE COMPENSATION FACTOR $k_3$ WITH THE COMPONENTS OF THE GRAVITATIONAL ACCELERATION $(A_x[-1.5], A_y[0])$

SA17
$\theta_x = 0°$ AND $\theta_y = -1.5°$? — NO

↓ YES

SA19
RECORD THE COMPENSATION FACTOR $k_4$ WITH THE COMPONENTS OF THE GRAVITATIONAL ACCELERATION $(A_x[0], A_y[-1.5])$

SAb20
OBTAIN THE COMPONENTS OF THE GRAVITATIONAL ACCELERATION $(A_x, A_y, A_z)$

SAb21
CALCULATE THE REFERENCE GRAVITATIONAL ACCELERATION $G_r$ ON THE BASIS OF THE COMPONENTS OF THE GRAVITATIONAL ACCELERATION $(A_x, A_y, A_z)$

END

## Fig. 12

| $\theta_x$ (deg) | | 0 | +1.5 | −1.5 |
|---|---|---|---|---|
| $\theta_y$ (deg) | $A_y$ \ $A_x$ | $A_x[0]$ | $A_x[+1.5]$ | $A_x[-1.5]$ |
| 0 | $A_y[0]$ | $k_0$ | $k_1$ | $k_3$ |
| +1.5 | $A_y[+1.5]$ | $k_2$ | $k_5$ | $k_7$ |
| −1.5 | $A_y[-1.5]$ | $k_4$ | $k_6$ | $k_8$ |

TBL1a

**European Patent Office**

**EUROPEAN SEARCH REPORT**

Application Number

EP 08 00 5813

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 0 432 979 A (YAMATO SCALE CO LTD [JP]) 19 June 1991 (1991-06-19) * claim 1 * * figures 1,3,6 * | 1 | INV. G01G3/14 |
| Y | | 2-9 | |
| Y | EP 1 413 859 A (TANITA SEISAKUSHO KK [JP]) 28 April 2004 (2004-04-28) * claim 1 * | 2-8 | |
| E | WO 2008/071270 A (SARTORIUS AG [DE]; FREYDANK GERD [DE]; GRAF WINFRIED [DE]; OLDENDORF C) 19 June 2008 (2008-06-19) * claims 1,3,8 * * figures 1,7 * | 1 | |
| Y | GB 2 324 377 A (BOSCH GMBH ROBERT [DE]) 21 October 1998 (1998-10-21) * the whole document * | 9 | |

TECHNICAL FIELDS SEARCHED (IPC)

G01G

The present search report has been drawn up for all claims

| Place of search | Date of completion of the search | Examiner |
|---|---|---|
| Munich | 4 July 2008 | Grand, Jean-Yves |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 08 00 5813

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2008

| Patent document cited in search report | | Publication date | Patent family member(s) | | Publication date |
|---|---|---|---|---|---|
| EP 0432979 | A | 19-06-1991 | JP | 3180722 A | 06-08-1991 |
| EP 1413859 | A | 28-04-2004 | JP | 2004138570 A | 13-05-2004 |
| | | | US | 2004122609 A1 | 24-06-2004 |
| WO 2008071270 | A | 19-06-2008 | DE | 102006059261 A1 | 03-07-2008 |
| GB 2324377 | A | 21-10-1998 | DE | 19715590 A1 | 05-11-1998 |
| | | | FR | 2762087 A1 | 16-10-1998 |
| | | | IT | MI980686 A1 | 15-10-1998 |

EPO FORM P0459

For more details about this annex : see Official Journal of the European Patent Office, No. 12/82

**EP 1 985 977 A1**

## REFERENCES CITED IN THE DESCRIPTION

### Patent documents cited in the description

- JP 2005049271 A